# EUROPÄISCHE PATENTSCHRIFT

(11) **EP 0 846 232 B1**
(45) Veröffentlichungstag und Bekanntmachung des Hinweises auf die Patenterteilung: **24.11.1999**
(21) Anmeldenummer: 96926317.7
(22) Anmeldetag: 19.07.1996
(51) Int. Cl.: F16C 9/04

(54) **PLEUELSTANGE FÜR KOLBENMASCHINEN, INSBESONDERE FÜR KOMPRESSOREN, UND VERFAHREN ZUR HERSTELLUNG EINER DERARTIGEN PLEUELSTANGE**
CONNECTING ROD FOR PISTON-OPERATED MACHINES, ESPECIALLY COMPRESSORS, AND PROCESS FOR ITS PRODUCTION
BIELLE POUR MACHINES A PISTON, NOTAMMENT POUR COMPRESSEURS, ET PROCEDE PERMETTANT DE PRODUIRE UNE BIELLE DE CE TYPE

(30) Priorität: 25.08.1995 DE 19531365
(43) Veröffentlichungstag der Anmeldung: 10.06.1998
(73) Patentinhaber: KNORR-BREMSE Systeme für Nutzfahrzeuge GmbH, 80809 München (DE)
(72) Erfinder: SPURNY, Dieter, D-85293 Reichertshausen (DE)
(86) Internationale Anmeldenummer: DE9601327
(87) Internationale Veröffentlichungsnummer: WO9708467

(56) Entgegenhaltungen:
- EP-A- 0 167 320
- EP-A- 0 342 800
- WO-A-87/06509
- DE-A- 4 332 444
- US-A- 4 668 107
- US-A- 5 105 538

## Beschreibung

Die Erfindung betrifft ein Verfahren zur Herstellung einer Pleuelstange.

Bekannt sind Druckgußpleuelstangen, z.B. Aluminiumdruckgußpleuelstangen für Kompressoren, welche als geschlossene Pleuel oder als geteilte Pleuel ausgebildet sind. Geteilte Pleuel sind z.B. aus zwei gegossenen Teilen gefertigt, welche mit Fixiernasen versehen sind. Bekannt sind fernerhin Pleuelstangen, welche mechanisch geteilt werden und über Paßschrauben bzw. Stifte oder Profilierungen zueinander fixiert werden.

Zur Fertigbearbeitung geteilter Pleuelstangen muß vor der Bearbeitung der Bohrung des geteilten Pleuelkopfes dessen Oberteil mit dem Unterteil verschraubt und in geeigneter Weise gekennzeichnet werden. Die Ausbildung seitlicher Schmiertaschen in Form von Freiräumungen ist nicht ohne weiteres möglich und kann allenfalls bereits im Rohteil vorgesehen werden. Pleuelstangen der bekannten Art erfordern nach allem eine mechanische Nachbearbeitung, welche mit erhöhtem Zeit- und Kostenaufwand verbunden ist.

Das der Fertigbearbeitung vorangehende Verschrauben von Oberteil und Unterteil ist im übrigen als problematisch zu betrachten, da selbst bei genauester Zentrierung der Teile immer ein geringfügiger Versatz hinzunehmen ist. Ein derartiger räumlicher Versatz beeinflußt in nachteiliger Weise den Schmierfilm, welcher nach Montage am Kurbelzapfen zwischen diesem und dem Innenumfang des Pleuelkopfauges existiert, d.h. sich bei Drehung des Kurbelzapfens relativ zum Auge bildet.

Es ist z.B. aus folgenden drei Druckschriften bekannt, diesen Versatz mittels Bruchtrennen zu vermeiden:

Aus der EP-A-0 167 320, das als Ausgangspunkt der Erfindung dienst, ist ein Verfahren zur Herstellung einer Pleuelstange für Kolbenmaschinen mit einer durch den Pleuelkopf verlaufenden Teilung bekannt. Das bekannte Verfahren hat folgende Verfahrensschritte:
a) ein gegossenes Rohteil wird hinsichtlich aller zu bearbeitenden Bereiche einer mechanischen Fertigbearbeitung unterzogen;
b) im Bereich der vorgesehenen Teilung des Pleuelkopfes werden am Innenumfang des Pleuelkopfauges Materialschwächungen mittels Kerbung vorgenommen; und
c) der Pleuelkopf wird nach der mechanischen Fertigbearbeitung und Kerbung mittels eines Brech-Trennwerkzeuges entlang der durch die Kerben vorgegebenen Bruch-Trennlinie gebrochen.

Ein aus Aluminiumdruckguß bestehendes Rohteil, das bruchgetrennt wird, ist aus der DE-A-4 332 444 bekannt.

Beim Bruchtrennen weitere Kerben am Außenbereich anzubringen, ist aus der US-A-5 105 538 bekannt.

Die obengenannten Druckschriften sagen nichts über das Anbringen von seitlichen Schmiermitteltaschen in Form von Freiräumungen aus.

Als Schmiermitteltaschen dienende Freiräumungen sind an sich z.B. aus der US-A-4 668 107 bekannt.

Davon ausgehend besteht die Aufgabe der Erfindung darin ein Verfahren zur Herstellung, eine Pleuelstange für Kolbenmaschinen, insbesondere für Kompressoren, zu schaffen, mit dem die Pleuelstange hinsichtlich ihrer Teilung mit wenig Zeit- und Kostenaufwand gefertigt werden kann und dennoch die Möglichkeiten äußerst exakter Fertigung, vor allem im Bereich der Teilung des Pleuelkopfes und des Pleuelkopfauges, zuläßt.

Zur Lösung dieser Aufgabe dienen die Merkmale des einzigen Patentanspruches.

Das erfindungsgemäße Verfahren vermittelt den Vorteil, daß das Rohteil der Pleuelstange fertig bearbeitet werden kann wie ein geschlossenes Pleuel und erst vor der Montage im Kompressor durch ein geeignetes Trenn-Brechwerkzeug an der Trennstelle, d.h. entlang einer Soll-Bruchlinie, geteilt wird. Hierbei ist von besonderem Vorteil, daß das beim Bruch sich bildende Profil (Zahnung) der Bruchstelle nachfolgend als Fixierung für die Verbindung und zugleich als Vertauschsicherung dient.

Die Ausbildung des Brech-Trennwerkzeuges und die Berücksichtigung der Trennkräfte und Verformungen ist derart ,daß die optimale Ausbildung des Pleuelkopfauges ohne Notwendigkeit mechanischer Nachbearbeitung erreicht wird, wobei gleichzeitig nachfolgend als Schmiertaschen dienende Freiräumungen am Innenumfang des Pleuelkopfauges mittels des Brech-Trennwerkzeuges ausgeformt werden.

Die Erfindung ist nachfolgend anhand eines Ausführungsbeispiels unter Bezugnahme auf die beigefügte Zeichnung erläutert.
Figur 1 ist eine teilweise geschnittene Seitenansicht eines Rohteils der Pleuelstange nach der Erfindung, unter Darstellung der für die Linie der Trennung vorgegebenen Kerbungen am Innenumfang des Pleuelkopfauges und am Außenbereich des Pleuelkopfes;
Figur 2 ist eine Schnittansicht von Linie II-II in Figur 1 unter Darstellung der für die Trennung dienenden Kerben;
Figur 3 ist eine vergrößerte Einzelansicht der am Innenumfang des Pleuelkopfauges befindlichen Kerbe;
Figur 4 ist eine der Figur 1 vergleichbare Seitenansicht der Pleuelstange nach mechanischer Fertigbearbeitung derselben; und
Figur 5 ist eine vergrößerte, teilweise geschnittene Seitenansicht des Pleuelkopfes der Pleuelstange unter Darstellung der Linie der Trennung und der mit Hilfe des Trennwerkzeuges im Wege der Trennung ausgeformten Freiräumungen.

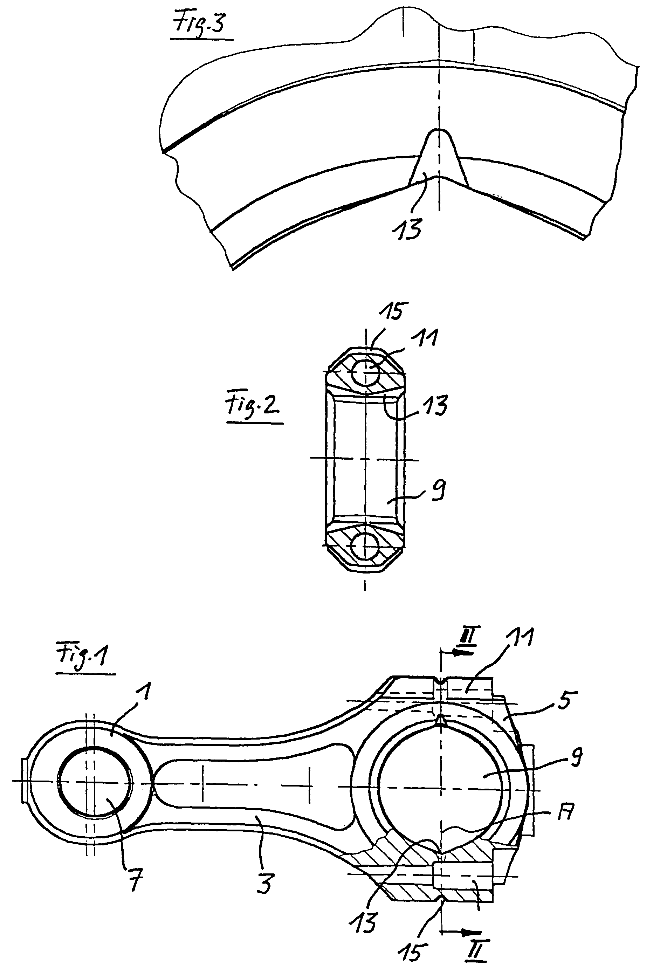

In Figur 1 der Zeichnung ist eine aus Gelenkkopf 1, Pleuelschaft 3 und Pleuelkopf 5 bestehende Pleuelstange dargestellt, welche erfindungsgemäß für eine entlang der Ebene A verlaufende Teilung vorbereitet ist. Die Pleuelstange ist aus Aluminiumdruckguß gefertigt und als Rohteil wiedergegeben, d.h. die dargestellte Pleuelstange weist im Druckguß gefertigt das Auge 7 des Gelenkkopfes, das Auge 9 des Pleuelkopfes und gegebenenfalls die Durchführungen 11 für (nicht dargestellte) Befestigungsschrauben auf.

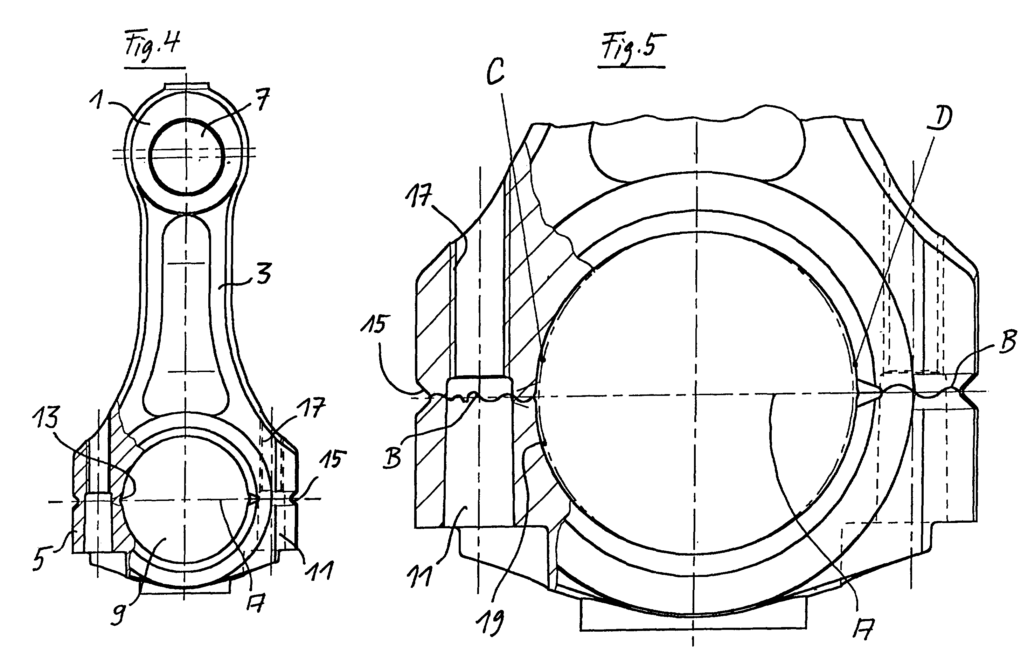

Im Bereich der Ebene A ist das in Figur 1 wiedergegebene Rohteil der Pleuelstange mit innenseitig am Innenumfang des Auges 9 und außenseitig verlaufenden Kerben 13 und 15 versehen. Die Figuren 2 und 3 geben in Schnittansicht und als vergrößerte Einzelansicht die mögliche Konturierung der Kerben 13 und 15 wieder.

Ausgehend von dem in Figur 1 dargestellten Rohteil wird die Pleuelstange nachfolgend einer Fertigbearbeitung unterzogen, d.h. die Augen 7 und 9 werden mit erforderlicher Genauigkeit gebohrt, desgleichen werden die Durchführungen 11, falls erforderlich, mit Innengewinde 17 versehen. Das Auge 9 weist mit Ausnahme des Bereichs der Kerbe 13 Kreisform auf, welche im Verlaufe des nachfolgend vorzunehmenden Teilens eine Abweichung der Kontur erfahren kann.

Wie vorstehend erläutert ist, wird das Rohteil der Pleuelstange fertig bearbeitet, und zwar hinsichtlich aller einer Fertigung zu unterziehenden Bereiche. Die Pleuelstange existiert zunächst als geschlossenes Pleuel und wird erst vor der Montage im Kompressor durch ein entsprechendes Werkzeug und Maßnahmen an der Trennstelle (Ebene A) des Rohteils geteilt. Hierbei wird mit einem entsprechend ausgebildeten Trennwerkzeug gearbeitet, das die Trennkräfte und Verformungen, die bei diesem Vorgang auftreten, berücksichtigt, wodurch eine optimale Ausbildung der Lagerform ohne Notwendigkeit mechanischer Nachbearbeitung erreicht wird.

Figur 5 gibt als vergrößerte, teilweise geschnittene Seitenansicht die Linie B des Bruchverlaufs am Pleuelkopf 5 wieder; in der linken Schnitthälfte nach Figur 5 ist mit C der Kreisverlauf der Bohrung des Auges 9 vor dem Brechen entlang der Linie B wiedergegeben, während in der rechten Schnitthälfte nach Figur 5 mit D der Verlauf am Innenumfang des Auges 9 nach dem Trennen bzw. nach dem Bruch der Linie B dargestellt ist. Ein Vergleich der beiden Konturen C und D verdeutlicht, daß beim Trennen des Pleuelkopfes 5 unter Verwendung eines geeigneten Werkzeuges Freiräumungen 19, also Vertiefungen entstehen, wie sie für die Aufnahme von Schmiermittel bei derartigen Pleuelstangen, und zwar im Bereich der Druckentlastung des Kurbelzapfens zweckmäßig sind.

Bei der Montage der in vorstehend erläuterten Weise getrennten Pleuelstange an einem Kurbelzapfen (Pleuellagerzapfen), also beim Zusammenfügen von Ober- und Unterteil, ist es besonders vorteilhaft, daß sich beim Bruch eine im wesentlichen willkürliche Zahnung gebildet hat. Dieses Zahnungsprofil ermöglicht ein absolut unverwechselbares Zusammenfügen und Verschrauben am Kurbelzapfen, und zwar ohne jeglichen Versatz.

### Bezugszeichenliste

- 1: Gelenkkopf
- 3: Pleuelschaft
- 5: Pleuelkopf
- 7: Auge
- 9: Auge
- 11: Durchführung
- 13: Kerbe
- 15: Kerbe
- 17: Innengewinde
- 19: Freiräumung

## Patentansprüche

1. Verfahren zur Herstellung einer Pleuelstange für Kolbenmaschinen, insbesondere für Kompressoren, mit einer durch den Pleuelkopf (5) verlaufenden Teilung, mit folgenden Verfahrensschritten:
a) ein aus Druckguß, insbesondere Aluminiumdruckguß, bestehendes Rohteil wird hinsichtlich aller zu bearbeitenden Bereiche einer mechanischen Fertigbearbeitung unterzogen;
b) im Bereich der vorgesehenen Teilung des Pleuelkopfes (5) werden am Innenumfang des Pleuelkopfauges (9) und am Außenbereich des Pleuelkopfes (5) wie bekannt Materialschwächungen mittels Kerbung (13, 15) vorgenommen; und
c) der Pleuelkopf (5) wird nach der mechanischen Fertigbearbeitung und Kerbung mittels eines Brech-Trennwerkzeuges entlang der durch die Kerben (13, 15) vorgegebenen Bruch-Trennlinie gebrochen, derart, daß gleichzeitig im Wege des Brechens innenseitig am Auge (9) des Pleuelkopfes zur Verwendung als Schmiermitteltaschen dienende Freiräumungen (19) ausgeformt werden.

## Claims

1. Process for the production of a connecting rod for piston-operated machines, in particular for compressors, having a split extending through the piston rod head (5), having the following process steps:
a) a blank consisting of die-cast metal, in particular die-cast aluminium, is subjected to mechanical finishing with respect to all the areas to be processed;
b) as is known, weakenings of the material are effected by means of notching (13, 15) in the region of the intended split in the connecting rod head (5) on the inner circumference of the connecting rod eye (9) and on the outer region of the connecting rod head (5); and
c) after the mechanical finishing and notching the connecting rod end (5) is broken along the rupture line produced by the notching (13, 15) so that, in the course of breaking, free spaces (19) are simultaneously formed on the inside of the eye (9) of the piston rod head for use as lubricant pockets.

## Revendications

1. Procédé pour fabriquer une bielle pour machines à pistons, notamment pour compresseurs, comportant une subdivision qui s'étend à travers la tête de bielle (5), procédé comprenant les étapes opératoires suivantes :
a) on soumet à un usinage mécanique de finition toutes les parties devant être usinées d'une ébauche formée d'une pièce coulée sous pression, notamment d'une pièce coulée sous pression en aluminium ;
b) au niveau de la subdivision prévue de la tête de bielle (5), on réalise, comme cela est connu, des affaiblissements de matière au moyen d'un encochage (13, 15) sur la périphérie intérieure de l'oeillet (9) de la tête de bielle et dans la partie extérieure de la tête de bielle (5) ;
c) après l'usinage mécanique de finition et l'encochage, on rompt la tête de bielle (5) à l'aide d'un outil de rupture-séparation le long de la ligne de rupture-séparation prédéfinie par les encoches (13, 15), de telle sorte que des dégagements (19) utilisés commc poches pour un agent lubrifiant sont formés simultanément au cours de l'opération de rupture, sur lc côté intérieur de l'oeillet (9) de la tête de bielle.
